# EUROPÄISCHE PATENTSCHRIFT

(11) **EP 1 288 077 B1**
(45) Veröffentlichungstag und Bekanntmachung des Hinweises auf die Patenterteilung: **26.05.2004**
(21) Anmeldenummer: 02016975.1
(22) Anmeldetag: 02.08.2002
(51) Int. Cl.: B60R 13/02

(54) **Innenschale für ein Dachmodul in Sandwich-Bauweise sowie Verfahren zu ihrer Herstellung**
Roof liner in sandwich design and method of making the same
Garniture de pavillon avec construction en sandwich et sa méthode de production

(30) Priorität: 23.08.2001 DE 10141243
(43) Veröffentlichungstag der Anmeldung: 05.03.2003
(73) Patentinhaber: ArvinMeritor GmbH, 63128 Dietzenbach (DE)
(72) Erfinder: Audibert, Bernard, 60386 Frankfurt (DE); Hock, Daniel, 63760 Johannesberg (DE)
(74) Vertreter: Sties, Jochen, Dipl.-Ing.

(56) Entgegenhaltungen:
- WO-A-01/40025
- PATENT ABSTRACTS OF JAPAN vol. 013, no. 398 (M-866), 5. September 1989 (1989-09-05) -& JP 01 141140 A (SUZUKI MOTOR CO LTD), 2. Juni 1989 (1989-06-02)
- PATENT ABSTRACTS OF JAPAN vol. 1995, no. 05, 30. Juni 1995 (1995-06-30) -& JP 07 052724 A (MITSUBOSHI BELTING LTD;OTHERS: 01), 28. Februar 1995 (1995-02-28)

## Beschreibung

Die Erfindung betrifft eine Innenschale für ein Dachmodul in Sandwich-Bauweise, mit einer Innenlage und einer Haltelage, in der eine Verstärkungslage eingebettet ist, wobei die Verstärkungslage in der Haltelage an deren der Innenlage zugewandter Seite angeordnet ist.

Eine solche Innenschale ist dafür vorgesehen, mit einer Außenschale verbunden zu werden, um ein Dachmodul in Sandwich-Bauweise zu bilden. Dabei wird die Haltelage mit ihrer von der Innenlage abgewandten Seite mit der Außenschale verklebt, verciipst oder anderweitig befestigt. Da die Verstärkungslage in der Haltelage an deren der Innenlage zugewandter Seite angeordnet ist, ergibt sich ein maximaler Abstand zwischen der bei Biegebeanspruchungen neutralen Faser des Dachmoduls und der Verstärkungslage; die Verstärkungslage leistet somit den maximal möglichen Beitrag zur Festigkeit des Dachmoduls.

Bisher wurde in die Haltelage ein sogenannter Abstandshalter eingeschäumt, der gewährleistet hat, daß sich die Verstärkungslage beim Schäumen auf der der Innenlage zugewandten Seite der Haltelage befindet. Als Abstandshalter konnte eine großporige Abstandsmatte verwendet werden. Die Abstandsmatte ist jedoch ein teures Bauteil.

Aus der JP-A-1 141 140 ist eine Innenschale gemäß dem Oberbegriff des Anspruchs 1 bekannt. Die Haltelage ist durch einen Polyurethanschaum gebildet, und die Verstärkungslage besteht aus einer Glasfasermatte. Die Glasfasermatte erstreckt sich anliegend an die Innenlage, und im Polyurethanschaum sind quer zur Fahrzeuglängsrichtung verlaufende Nuten ausgebildet. Diese haben eine solche Tiefe, daß zwischen dem Boden der Nut und der Glasfasermatte eine Schicht aus Polyurethanschaum verbleibt.

Aus der JP-A-7 052 724 ist eine Innenschale für ein Dachmodul bekannt, die aus einem glasfaserverstärkten Schaum und einer Kunstharzschicht besteht. Der Schaum ist mit einer Vielzahl von vorstehenden Noppen versehen, so daß dann, wenn die Innenschale mit einer Dachhaut verbunden ist, ein durchgehender Luftraum gebildet ist, der zur Schalldämpfung dient.

Die Aufgabe der Erfindung besteht somit darin, eine Innenschale der eingangs genannten Art zu schaffen, die bei geringen Stückkosten eine präzise in der Haltelage positionierte Verstärkungsmatte aufweist. Die Aufgabe der Erfindung besteht außerdem darin, ein Verfahren zur Herstellung einer solchen Innenschale zu schaffen.

Zu diesem Zweck ist erfindungsgemäß bei einer Innenschale der eingangs genannten Art vorgesehen, daß die Haltelage auf ihrer von der Innenlage abgewandten Seite mit taschenartigen Aussparungen versehen ist, die sich bis hin zur Verstärkungslage erstrecken. Die taschenartigen Aussparungen sind die Folge des für die Herstellung der Innenschale verwendeten Verfahrens. Bei diesem Verfahren wird eine Schäumform bereitgestellt, die auf einer Seite mit noppenartigen Vorsprüngen versehen ist. In die geöffnete Schäumform wird eine Innenlage eingelegt, und auf die Innenlage wird eine Verstärkungslage aufgelegt. Auf die Verstärkungslage wird dann ein Schäummaterial aufgebracht, das im ausgehärteten Zustand eine Haltelage bilden kann. Dann wird die Schäumform geschlossen, so daß die Vorsprünge an der Verstärkungslage anliegen und diese an der Innenlage halten, und das Schäummaterial härtet aus, so daß die Verstärkungslage angrenzend an die Innenlage in die Haltelage eingeschäumt ist. Die Positionierung der Verstärkungslage in der Haltelage wird also nicht mehr durch ein Bauteil erreicht, das in jede Innenschale eingeschäumt wird, sondern durch die Gestaltung der Schäumform, die für den Schäumvorgang verwendet wird. Die Größe der in der Haltelage erzeugten Aussparungen bzw. der in der Schäumform vorgesehenen Vorsprünge kann angepaßt an die jeweiligen Anforderungen als Kompromiß zwischen einer Vielzahl von teils gegenläufigen Parametern verwendet werden. Die Untergrenze für den Anteil der Aussparungen an der gesamten Fläche ist vorgegeben durch die Flexibilität der Verstärkungslage; die Aussparungen müssen so nahe beieinander angeordnet sein, daß die Verstärkungslage auch in den dazwischenliegenden Bereichen, in denen sie in der Schäumform nicht von den Vorsprüngen gegen die Innenlage gedrückt wird, sich nicht von der Innenlage entfernen kann. Die Obergrenze für den Anteil der Aussparungen an der Gesamtfläche ist vorgegeben durch die mindestens notwendige Festigkeit der Haltelage sowie der von dieser bereitgestellten Fläche zum Verkleben mit der Außenschale; die zwischen den Aussparungen verbleibenden Stege müssen gewisse Mindestquerschnitte und eine gewisse Mindestfläche haben. Die Größe der Aussparungen hat aber noch weitere Auswirkungen. Die Aussparungen bilden Hohlkammern im Dachmodul, die sich vorteilhaft auf die Akustik auswirken. Diese Auswirkungen können durch die Gestaltung der Aussparungen optimiert werden. Außerdem verringern die Aussparungen das Volumen der Haltelage, so daß bei der Herstellung weniger Schäummaterial eingebracht werden muß. Dies verringert die Kosten weiter. Die Aussparungen in der Haltelage verringern auch, solange die Innenschale nicht mit der Außenschale verklebt ist, die Festigkeit der Innenschale, so daß diese leichter gefaltet werden kann. Schließlich verringern die Aussparungen die Fläche der Haltelage, die mit der Außenschale verklebt wird. Dies erleichtert die Trennbarkeit von Innenschale und Außenschale beim Recyceln. Die Größe und Anzahl der Aussparungen kann in verschiedenen Bereichen des Dachmoduls unterschiedlich sein, um in diesen Bereichen unterschiedliche Eigenschaften verstärkt zu nutzen.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 schematisch ein Dach mit einem Dachmodul, das in Sandwich-Bauweise aufgebaut ist;
- Figur 2 einen Schnitt entlang der Ebene II-II von Figur 1;

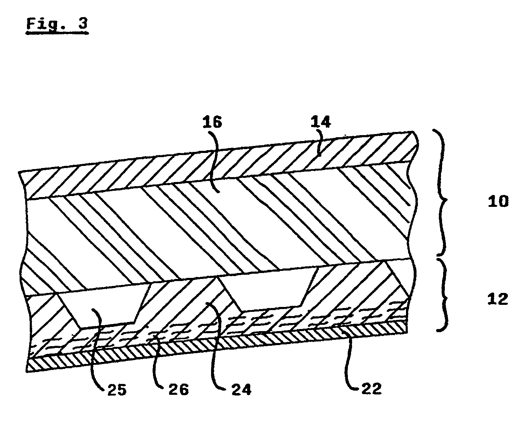

- Figur 3 in vergrößertem Maßstab einen Ausschnitt von Figur 2; und
- Figur 4 in einer schematischen, perspektivischen Ansicht ei n Schäumwerkzeug mit Haltelage und Innenlage.

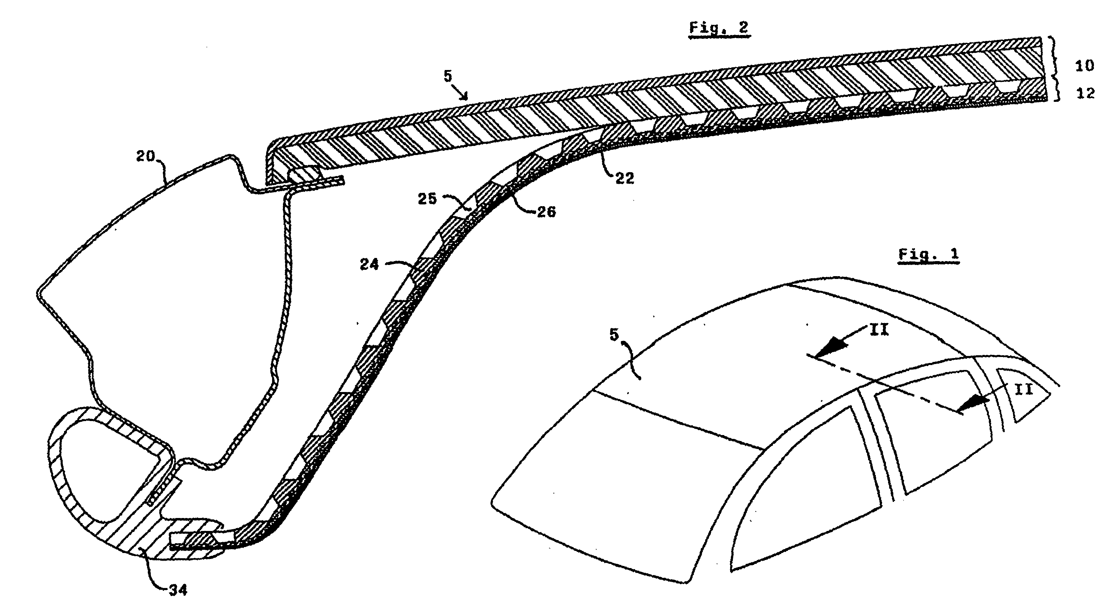

In Figur 1 ist schematisch ein Fahrzeug mit Fahrzeugdach 5 gezeigt, das als Dachmodul in Sandwich-Bauweise aufgebaut ist. Wie in Figur 2 zu sehen ist, besteht das Dachmodul aus einer Außenschale 10 und einer Innenschale 12.

Die Außenschale ist im wesentlichen gebildet aus einer Außenhaut 14, die aus Aluminium oder Kunststoff bestehen kann, und einer Mittellage 16 aus PUR. Die Außenschale 10 ist mit einem Längsholm 20 der Fahrzeugkarosserie verklebt.

Die Innenschale 12 ist im wesentlichen gebildet aus einer Innenlage 22 und einer Haltelage 24, in welche eine Verstärkungslage 26 eingebettet ist. Die Innenlage kann eine Matte aus nachgiebigem Kunststoff sein, der mit einem Dekor versehen sein kann. Die Innenlage kann auch durch ein Gewebe oder Gewirk gebildet sein, das eventuell mit einer Sperrschicht aus Kunststoff versehen ist. Die Sperrschicht verhindert, daß das Material der Haltelage beim Schäumen durch die Innenlage hindurchtritt. Die Verstärkungslage 26 kann eine Matte aus einem Glasfasergewebe sein.

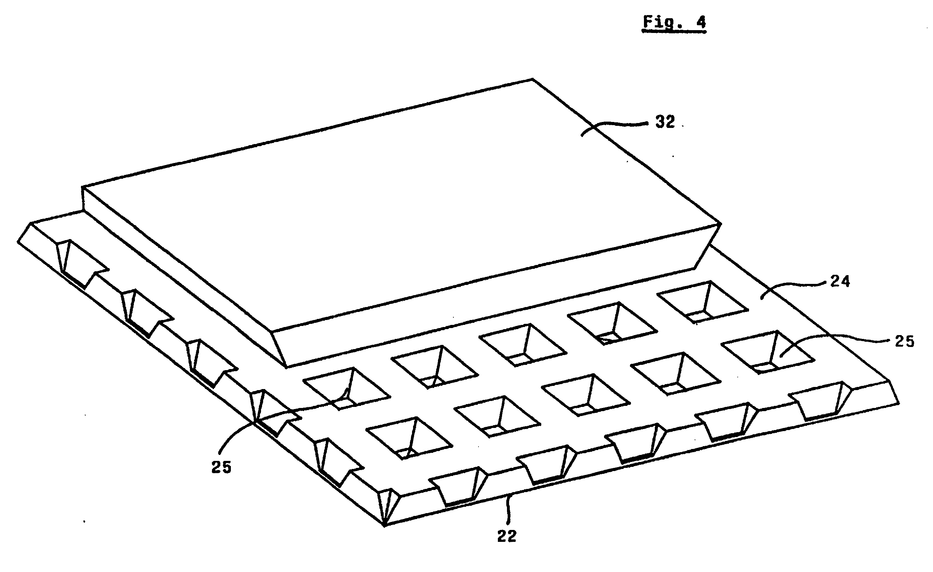

Zur Herstellung der Innenschale 12 wird die Innenlage 22 in eine Schäumform eingelegt. Die Schäumform (in Figur 4 schematisch mit dem Bezugszeichen 32 gezeigt) ist mit einer Vielzahl von (nicht dargestellten) noppenförmigen Vorsprüngen versehen ist, die hier eine quadratische Grundform haben und sich zu ihrem freien Ende hin verjüngen. Dies erleichtert das Entformen.

Auf die Innenlage 22 wird die Verstärkungslage 26 aufgelegt. Auf die Verstärkungslage 26 wird ein aushärtbares Schäummaterial aufgebracht. Dann wird die Schäumform geschlossen, so daß die Vorsprünge der Schäumform die Verstärkungslage 26 gegen die Innenlage 22 drücken. Anschließend härtet das Schäummaterial zur Haltelage 24 aus, in welche die Verstärkungslage 26 eingeschäumt ist. Als Negativ-Abbild der Noppen der Schäumform 32 weist die Haltelage 24 eine Vielzahl von taschenförmigen Aussparungen 25 auf. Am Boden der Vorsprünge liegt die Verstärkungslage 26, eingebettet in die Haltelage 24, partiell frei.

Wie in Figur 2 zu sehen ist, ist die Innenschale 12 in der Mitte des Dachmoduls mit der Außenschale 10 verklebt. Alternativ könnte eine Textil-Haftverbindung ("Klett-Verschluß") verwendet werden. Da die Verstärkungslage 26 auf der der Innenlage 22 zugewandten Seite der Haltelage 24 liegt, liegt sie gleichzeitig in großem Abstand von der neutralen Faser des Sandwich-Dachmoduls. Dies gewährleistet eine hohe Biegefestigkeit. Zum Außenrand des Dachs hin ist die Innenschale 12 nicht mit der Außenschale 10 verklebt, so daß sie über den Längsholm der Fahrzeugkarosserie hinweg bis zu einer Dichtung 34 geführt werden kann. Die in der Haltelage vorhandenen Aussparungen 25 erleichtern das Biegen der Innenschale 12.

### Bezugszeichenliste:

- 5:: Fahrzeugdach
- 10:: Außenschale
- 12:: Innenschale
- 14:: Außenhaut
- 16:: Mittellage
- 20:: Längsholm
- 22:: Innenlage
- 24:: Haltelage
- 26:: Verstärkungslage
- 32:: Schäumform
- 34:: Dichtung

## Patentansprüche

1. Innenschale (12) für ein Dachmodul in Sandwich-Bauweise, mit einer Innenlage (22) und einer Haltelage (24), in der eine Verstärkungslage (26) eingebettet ist, wobei die Verstärkungslage in der Haltelage an deren der Innenlage zugewandter Seite angeordnet ist, **dadurch gekennzeichnet, daß** die Haltelage (24) auf ihrer von der Innenlage (22) abgewandten Seite mit taschenartigen Aussparungen (25) versehen ist, die sich bis hin zur Verstärkungslage (26) erstrecken.

2. Innenschale nach Anspruch 1, **dadurch gekennzeichnet, daß** die Aussparungen (25) eine im wesentlichen rechteckige Grundform haben.

3. Innenschale nach Anspruch 1 oder Anspruch 2, **dadurch gekennzeichnet, daß** die Aussparungen (25) sich zur Verstärkungslage (26) hin verjüngen.

4. Innenschale nach einem der vorhergehenden Ansprüche, **dadurch gekennzeichnet, daß** die Aussparungen (25) gleichmäßig nebeneinanderliegend angeordnet sind, wobei der Abstand zwischen benachbarten Aussparungen (25) kleiner ist als die Breite der Aussparungen (25).

5. Innenschale nach einem der vorhergehenden Ansprüche, **dadurch gekennzeichnet, daß** mit der Haltelage (24) eine Außenschale (10) verbunden ist.

6. Innenschale nach Anspruch 5, **dadurch gekennzeichnet, daß** die Haltelage (24) mit der Außenschale (10) verklebt ist.

7. Innenschale nach Anspruch 5, **dadurch gekennzeichnet, daß** die Haltelage (24) mit der Außenschale (10) durch einen Klettverschluß verbunden ist.

8. Verfahren zur Herstellung einer Innenschale (12) für ein Dachmodul in Sandwich-Bauweise, **dadurch gekennzeichnet, daß** eine Schäumform (32) bereitgestellt wird, die auf einer Seite mit noppenartigen Vorsprüngen versehen ist, daß in die geöffnete Schäumform eine Innenlage (22) eingelegt wird, daß auf die Innenlage eine Verstärkungslage (26) aufgelegt wird, daß auf die Verstärkungslage (26) ein Schäummaterial aufgebracht wird, das im ausgehärteten Zustand eine Haltelage bilden kann, daß die Schäumform geschlossen wird, so daß die Vorsprünge an der Verstärkungslage (26) anliegen und diese an der Innenlage (22) hatten, und daß das Schäummaterial ausgehärtet wird, so daß die Verstärkungslage (26) angrenzend an die Innenlage (22) in die Haltelage (24) eingeschäumt ist.

## Claims

1. An inner shell (12) for a sandwich-type roof module, comprising an interior layer (22) and a support layer (24) in which a reinforcing layer (26) is embedded, the reinforcing layer in the support layer being arranged on the side of the support layer that faces the interior layer, wherein the support layer (24) is provided on its side facing away from the interior layer (22) with pocket-like recesses (25) which extend up to the reinforcing layer (26).

2. The inner shell as recited in Claim 1, wherein the recesses (25) have a basically rectangular shape.

3. The inner shell as recited in Claim 1 or Claim 2, wherein the recesses (25) taper towards the reinforcing layer (26).

4. The inner shell as recited in any of the preceding claims, wherein the recesses (25) are arranged uniformly next to each other, the distance between adjacent recesses (25) being smaller than the width of the recesses (25).

5. The inner shell as recited in any of the preceding claims, wherein an outer shell (10) is bonded to the support layer (24).

6. The inner shell as recited in Claim 5, wherein the support layer (24) is glued to the outer shell (10).

7. The inner shell as recited in Claim 5, wherein the support layer (24) is joined by a velcro fastener to the outer shell (10).

8. A method for manufacturing an inner shell (12) for a sandwich-type roof module, wherein a foam mold (32) is made available which is provided on one side with nap-like projections; an interior layer (22) is placed into the opened foam mold; a reinforcing layer (26) is placed onto the interior layer; a foam material, which in the hardened state can form a support layer, is applied to the reinforcing layer (26); the foam mold is closed so that the projections make contact with the reinforcing layer (26) and hold them to the interior layer (22); and the foam material is hardened so that the reinforcing layer (26) enclosed in foam in the support layer (24) adjacent to the interior layer (22).

## Revendications

1. Coque intérieure (12) pour un module de toit dans une mode de construction en sandwich, comprenant une couche intérieure (22) et une couche d'appui (24), dans laquelle est noyée une couche de renforcement (26) qui est disposée dans la couche d'appui du côté tourné vers la couche intérieure, **caractérisée en ce que** la couche d'appui (24) est munie sur sa face opposée à la couche intérieure (22) de cavités (25) du genre poche et qui s'étendent vers l'intérieur jusqu'à la couche de renforcement (26).

2. Coque intérieure selon la revendication 1, **caractérisée en ce que** les cavités (25) présentent une forme de base sensiblement rectangulaire.

3. Coque intérieure selon la revendication 1 ou 2, **caractérisée en ce que** les cavités (25) se rétrécissent en direction de la couche de renforcement (26).

4. Coque intérieure selon l'une des revendications précédentes, **caractérisée en ce que** les cavités (25) sont disposées régulièrement les unes à côté des autres, la distance entre des cavités (25) voisines étant inférieure à la largeur des cavités (25).

5. Coque intérieure selon l'une des revendications précédentes, **caractérisée en ce qu'**une coque extérieure (10) est reliée à la couche d'appui (24).

6. Coque intérieure selon la revendication 5, **caractérisée en ce que** la couche d'appui (24) est collée à la couche extérieure (10).

7. Coque intérieure selon la revendication 5, **caractérisée en ce que** la couche d'appui (24) est reliée à la couche extérieure (10) par une liaison à accrochage (du genre Velcro - marque déposée).

8. Procédé de fabrication d'une coque intérieure (12) pour un module de toit dans un mode de construction en sandwich, **caractérisé en ce que** l'on prépare un moule (32) pour matière alvéolaire, qui est muni sur une face de saillies du genre bouton, **en ce que** l'on dépose dans le moule pour matière alvéolaire ouvert une couche intérieure (22), **en ce que** l'on dépose sur la couche intérieure une couche de renforcement (26), **en ce que** l'on applique sur la couche de renforcement (26) un matériau alvéolaire, qui à l'état durci peut former une couche d'appui, **en ce que** l'on ferme le moule pour matière alvéolaire, de sorte que les saillies soient situées sur la couche de renforcement (26) et que celle-ci s'appuie sur la couche intérieure (22), et **en ce que** la matière alvéolaire est durcie, de sorte que la couche de renforcement (26) soit intégrée, contiguë à la couche intérieure (22), sous une forme alvéolaire dans la couche d'appui (24).
